# EUROPÄISCHE PATENTSCHRIFT

(11) **EP 2 035 739 B1**
(45) Veröffentlichungstag und Bekanntmachung des Hinweises auf die Patenterteilung: **21.10.2009**
(21) Anmeldenummer: 07786844.6
(22) Anmeldetag: 26.06.2007
(51) Int. Cl.: F17C 6/00

(54) **VERFAHREN ZUM BETRIEB EINER VORRICHTUNG ZUR BEFÜLLUNG EINES BEHÄLTERS MIT KRYOGEN GESPEICHERTEM KRAFTSTOFF**
METHOD FOR OPERATING A DEVICE FOR FILLING A CONTAINER WITH CRYOGENICALLY STORED FUEL
PROCÉDÉ DE FONCTIONNEMENT D'UN DISPOSITIF DESTINÉ AU REMPLISSAGE D'UN RÉSERVOIR DE CARBURANT STOCKÉ SOUS FORME CRYOGÉNIQUE

(30) Priorität: 05.07.2006 DE 102006031000
(43) Veröffentlichungstag der Anmeldung: 18.03.2009
(73) Patentinhaber: Bayerische Motoren Werke Aktiengesellschaft, 80809 München (DE)
(72) Erfinder: FISCHER, Gregor, 85737 Ismaning (DE); BARNSTEINER, Robert, 80807 München (DE); SCHNAGL, Johann, 82061 Neuried (DE)
(86) Internationale Anmeldenummer: PCT/EP2007/056363
(87) Internationale Veröffentlichungsnummer: WO 2008/003616

(56) Entgegenhaltungen:
- WO-A-02/064395
- DE-A1- 3 344 770
- DE-A1- 4 104 766
- DE-A1- 4 129 020
- DE-A1-102004 056 186
- DE-U1- 20 311 991
- US-A- 5 597 020

## Beschreibung

Die Erfindung betrifft ein Verfahren zum Betrieb einer Vorrichtung zur Befüllung eines Behälters mit kryogen gespeichertem Kraftstoff, insbesondere zur Versorgung einer ein Kraftfahrzeug antreibenden Brennkraftmaschine, nach dem Oberbegriff des ersten Anspruchs. Zum technischen Umfeld wird auf die DE 10 2004 056 186 A1 verwiesen.

Kraftstoffe zum Antrieb von Kraftfahrzeugen, wie bspw. Wasserstoff oder Erdgas oder dgl. können, um die geforderten volumetrischen und gravimetrischen Speicherdichten zu erreichen, praktisch nur verflüssigt und somit stark abgekühlt gespeichert werden. Der tiefkalte, flüssige Wasserstoffvorrat wird im Fahrzeug im siedenden oder nahe dem siedenden Zustand in dem thermisch sehr gut isolierten, druckdichten Behälter gespeichert. Die physikalische Dichte des siedenden Wasserstoffs wird dabei durch Lagerung bei einer Temperatur wenig über der Siedetemperatur bei Umgebungsdruck, ca. 20 K, maximal. In den heute technisch umgesetzten Vorratsbehältern liegt der Wasserstoff typischerweise bei Temperaturen von ca. 21 K bis ca. 27 K und den damit korrespondierenden Siededrücken von ca. 2 bar (abs.) bis ca. 5 bar (abs.) vor. Im unteren Teil des Vorratsbehälters liegt der siedende Wasserstoff als massedichtere flüssige Phase (LH2) und darüber liegend als gasförmige Phase (GH2) vor. Es ist sowohl eine gasförmige als auch eine flüssige Entnahme des Wasserstoffs aus dem Speicherbehälter möglich und sinnvoll. Durch Wasserstoffentnahme im Betrieb des Speichers bei Versorgung der Brennkraftmaschine nach einer Druckaufbauphase wird der Speicherdruck bis zum Erreichen des Speicher-Betriebsdrucks ohne gezielten Wärmeeintrag abgebaut. Wegen der bei Flüssigentnahme geringeren Enthalpieabfuhr und des dadurch bedingten langsameren Druckabbaus, ist hierfür eine Entnahme aus der Gasphase (Gasentnahme) sinnvoll.

Bei dieser kryogenen Kraftstoffspeicherung verdampft jedoch durch Wärmeeintrag in den Kraftstoff-Tank kontinuierlich eine geringe Menge von flüssigem Kraftstoff. Dadurch erhöht sich der Druck im Kraftstoff-Tank, bis der für diesen eingestellte Grenzwert, auch Boil-Off-Druck genannt, erreicht ist und der weiter verdampfende Kraftstoff als so genanntes Boil-Off-Gas aus dem Kraftstoff-Tank abgeblasen werden muss. Insbesondere wenn kein Verbraucher für den Kraftstoff in Betrieb ist, d.h. insbesondere dann, wenn die Brennkraftmaschine außer Betrieb ist, steigt als Folge des Wärmeeintrags ohne Entnahme der Tank-Innendruck an. Aus Sicherheitsgründen muss dieser Druck durch Öffnen von Ventilen begrenzt werden. Im allgemeinen wird dabei das Boil-Off-Gas über Abblaseleitungen, in denen die besagten Ventile vorgesehen sind, in die Umgebung abgegeben. Die Wahl des Betriebsdrucks im Kraftstoff-Tank und des Druckhubs zwischen Betriebsdruck und Boil-Off Druck bestimmen neben der Größe des Wärmeeintrags maßgeblich die verlustfreie Druckaufbauzeit.

Bei einer Betankung eines Behälters für kryogene Flüssigkeiten, dessen Temperatur oberhalb der Betriebstemperatur liegt, ist die überschüssige Wärmeenergie vorteilhafterweise mit dem Rückgas abzuführen. Als Zeitfenster steht dazu die Betankungszeit zur Verfügung. Wärme, die während der Betankung nicht abgegeben werden kann, wird vom Wasserstoff aufgenommen und führt, wenn das Fahrzeug nicht mit Wasserstoff betrieben wird, zu einem Druckanstieg im Tank.

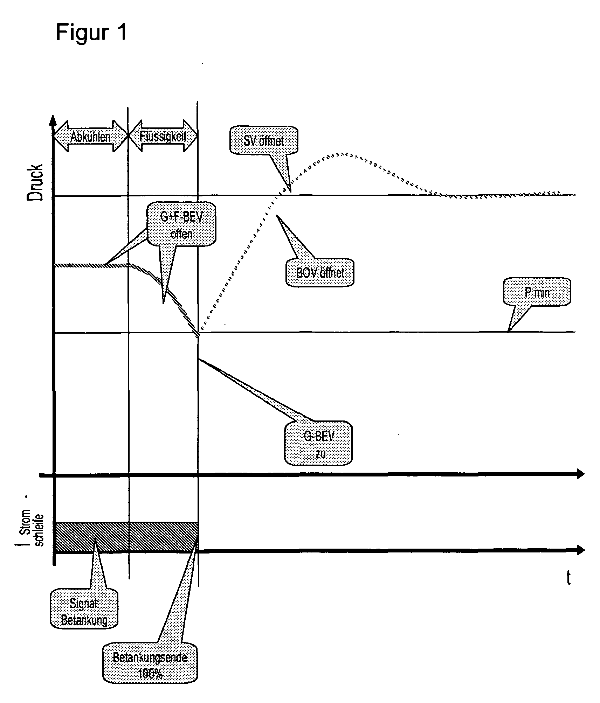

Figur 1 zeigt den Stand der Technik beim Befüllen eines Behälters für kryogen gespeicherten Kraftstoff an einer Tankstelle, für den Fall einer Warmbetankung. Der warme Behälter wird mittels flüssigem Wasserstoff von der Tankstelle befüllt und dabei gekühlt, indem die gesamte zugeführte Wasserstoff-Masse wird als erwärmter gasförmiger Wasserstoff wieder an die Tankstelle abgegeben wird.

Wenn der Behälter die notwendige Temperatur erreicht hat, das heißt, LH2 angenommen wird, steigt der Flüssigkeitsspiegel im Behälter. Eine Restmenge erwärmtes Gas wird weiterhin an die Tankstelle abgeführt. Am Ende der Betankung hat der Flüssigkeitspegel im Behälter 100 % erreicht, die Betankung wird beendet und alle Behälterventile werden geschlossen.

Zu diesem Zeitpunkt ist der Behälter jedoch nicht vollständig durchgekühlt, Restwärme wird vom Wasserstoff aufgenommen, dieser erwärmt sich und dehnt sich aus, dadurch steigt der Druck im Behälter. Der Druckanstieg kann so groß sein, dass auch durch das Ansprechen des Boil-off-Ventils keine ausreichenden Mengen Gas abgeführt werden können und aufgrund weiteren Druckanstiegs ein unerwünschtes Öffnen des Sicherheitsventils stattfindet.

Je nach Warmbetankungsdauer und Füllstand am Betankungsende wird Wasserstoff an die Umgebung abgegeben, und zwar bis zu 900g/h bzw. bis 1 kg//Warmbetankung. Dadurch wird die Emissionsgrenze im Betriebsfall (5g/Tag), wie im Störfall (60g/h), erheblich überschritten und ein Garagenparken ist nach einer Warmbetankung nicht möglich.

Daher ist es Aufgabe der Erfindung, eine Verfahren zum Betrieb einer Vorrichtung zum Befüllen eines Behälters zur kryogenen Speicherung von Kraftstoff bereitzustellen, das es ermöglicht, eine Warmbetankung durchzuführen, die den Druckanstieg im Behälter so gering hält, dass über das Sicherheitsventil kein Wasserstoff abgeblasen werden muss und so die Standzeit des Kryotanks erhöht werden kann.

Die Aufgabe wird erfindungsgemäß mit den Verfahrensschritten des Anspruchs 1 gelöst. Vorteilhafte Aus- und Weiterbildungen sind Inhalt der Unteransprüche.

Die Erfindung stellt ein Verfahren zum Betrieb einer Vorrichtung zum Befüllen eines Behälters zur Speicherung von Kraftstoff als kondensiertes Gas, insbesondere eines Kryotanks, für einen mit kryogen gespeichertem Kraftstoff betreibbaren Verbraucher, insbesondere eine Brennkraftmaschine eines Kraftfahrzeugs, bereit, wobei der Behälter eine Befülleinrichtung für den kryogen gespeicherten Kraftstoff besitzt, mindestens bestehend aus einer Befüllleitung und einer Entnahmeleitung, zur Verbindung mit einer tankstellenseitigen Befülleinrichtung. Der Befüllvorgang wird dabei so gesteuert, dass in einem ersten Zeitabschnitt, zur Kühlung des Behälters, in diesen über die Befüllleitung kondensiertes Gas eingeleitet wird, das zumindest größtenteils als Gas über die Entnahmeleitung wieder entnommen wird und dass in einem zweiten, darauf folgenden Zeitabschnitt, der Behälter mit kondensiertem Gas, unter Entnahme mindestens des dadurch verdrängten Gases, befüllt wird. Das Verfahren ist dadurch gekennzeichnet, dass in einem, darauf folgenden, dritten Zeitabschnitt, die Befüllleitung geschlossen wird und die Entnahmeleitung offen gehalten wird, um Gas aus dem Behälter zur Tankstelle zurückzuführen bis der Druck und/oder die Temperatur im Behälter auf vorbestimmte Werte gesunken sind.

Dadurch ist es möglich, dass die Betankungszeit bei einer Warmbetankung signifikant verkürzt wird. Die Warmbetankungsdauer ist nämlich abhängig von der tatsächlichen, sich noch im System befindlichen Wärmemenge. Damit geht die tatsächliche Behältertemperatur in die Betrachtung mit ein.

Die Absenkung des Drucks während des dritten Zeitabschnitts, der Konditionierung, führt zu einer Redzierung der abzugebenden Gasmenge, da die Verdampfungsenthalpie bei niedrigeren Drücken stark ansteigt. Niedriger Druck bedeutet aber im Siedezustand auch eine niedrigere Temperatur. Daraus folgt, dass die Temperaturdifferenz zu den noch warmen Bauteilen größer ist und damit die Wärme schneller an den Wasserstoff abgegeben wird, was zu einer Verkürzung der Betankungszeit führt.

Außerdem wird der Druckanstieg im Behälter so gering gehalten, dass über das Sicherheitsventil kein Wasserstoff abgeblasen werden muss. Dadurch wird die Standzeit des Kryotanks erhöht.

Eine vorteilhafte Ausführung des Verfahrens ist dadurch gekennzeichnet, dass auf den dritten Zeitabschnitt ein vierter Zeitabschnitt folgt, in dem die Befüllleitung nochmals geöffnet und wieder geschlossen wird.

Wenn Druck bzw. Temperatur im Behälter auf ein erforderliches Maß abgesunken sind, wird das Signal "Betankung" von Fahrzeug weggeschaltet, und das Flüssig-Betankungsventil kurzzeitig geöffnet. Das hat den Vorteil, dass dadurch seitens der Tankstelle auf einfache Weise die Funktionsroutine "Ende der Betankung" ausgelöst werden kann. Anschließend kann die Betankungskupplung zum Lösen freigegeben werden.

Eine weitere vorteilhafte Ausführung des Verfahrens ist dadurch gekennzeichnet, dass eine tankstellenseitig vorhandene Regeleinrichtung, insbesondere ein Zweipunktregler oder ein proportionales Regelorgan, im dritten Zeitabschnitt den Druck im Behälter über dem Umgebungsdruck aber unterhalb des Behälterbetriebsdrucks hält.

Im dritten Zeitabschnitt, in dem die Konditionierung stattfindet, nimmt mit fallendem Wärmeeintrag die Gasmenge und damit auch Druck im Behälter ab. Vorteilhafterweise ist es möglich, aus dem sich einstellenden Druck Rückschluss auf die verbleibende Restwärmemenge im Behälter zu schließen. Ist die Restwärmemenge auf einen Betrag reduziert, die bei Aufnahme durch den Wasserstoff zu keinem übermäßigen Anstieg des Behälterdrucks und damit zum Öffnen des Sicherheitsabblaseventils führen wird, kann der Konditionierungsvorgang durch schließen des Entnahmeventils abgeschlossen werden. Dies betrifft eine Regeleinrichtung mit Proportionalem Regelorgan.

Unter Verwendung eines Zweipunktreglers als Regelorgan wird bei der Konditionierung der Druck im Behälter niedrig gehalten. Das Druckband liegt unterhalb des normalen Betriebsdrucks des Behälters, jedoch oberhalb des Umgebungsdrucks. Bei geschlossenem Absperrorgan des Zweipunktreglers der Tankstelle steigt der Behälterdruck an. Mit fallendem Wärmeeintrag durch den Behälter fällt auch die Druckanstiegsgeschwindigkeit im Behälter. Durch Auswertung dieser Messwerte kann auf die im System noch vorhandene Wärmerestmenge geschlossen werden. Ist die Wärmerestmenge auf einen Betrag reduziert, die bei Aufnahme durch den Wasserstoff zu keinem übermäßigen Anstieg des Behälterdrucks und damit zum Öffnen des Sicherheitsabblaseventils führen wird, kann das Entnahmeventil geschlossen und die Konditionierung damit beendet werden.

Somit kann im dritten Zeitabschnitt die noch vorhandene Wärmemenge im Tanksystem günstig über die Druckanstiegsgeschwindigkeit oder den vorhandenen Momentandruck im Behälter ermittelt werden, wobei die Entnahmeleitung frühestens dann geschlossen wird, wenn eine nachfolgende Druckerhöhung, hervorgerufen durch die noch vorhandene Wärmemenge im Tanksystem und durch die geschlossene Entnahmeleitung, unterhalb des Druckgrenzwerts bleiben wird, der für das Öffnen eines Tanksicherheitsabblaseventils vorgesehen ist.

Weitere bevorzugte Ausführungen des Verfahrens sind dadurch gekennzeichnet, dass der Betankungsvorgang frühestens nach Ablauf des dritten Zeitabschnitts durch ein- /oder gegenseitige Freigabe fahrzeug- und tankstellenseitiger Betankungsorgane beendet ist. Für die beschriebenen Steuervorgänge ist vorteilhafterweise ein, insbesondere tankstellenseitiges, Steuergerät vorhanden, das vorgegebene und Messwerte entsprechend der Verfahrensschritte verarbeitet.

Drei bevorzugte Ausführungsbeispiele des erfindungsgemäßen Verfahrens sind in der nachfolgenden Beschreibung und der zugehörigen Zeichnung näher dargestellt. Es zeigen:
- Figur 1:: ein Druckverlauf-Zeit-Diagramm für die Befüllung eines Behälters mit kryogen gespeichertem Kraftstoff in zwei Zeitabschnitten nach dem Stand der Technik,
- Figur 2:: ein Druckverlauf-Zeit-Diagramm für die Befüllung eines Behälters mit kryogen gespeichertem Kraftstoff in drei Zeitabschnitten gemäß des erfindungsgemäßen Verfahrens mit einem Zweipunktregler,
- Figur 3:: ein Druckverlauf-Zeit-Diagramm für die Befüllung eines Behälters mit kryogen gespeichertem Kraftstoff in drei Zeitabschnitten gemäß des erfindungsgemäßen Verfahrens mit einem proportionalen Re- gelorgan und
- Figur 4:: ein Druckverlauf-Zeit-Diagramm für die Befüllung eines Behälters mit kryogen gespeichertem Kraftstoff in drei Zeitabschnitten gemäß des erfindungsgemäßen Verfahrens ohne tankstellenseitigem Re- gelorgan.

Figur 1 zeigt den Stand der Technik beim Befüllen eines Behälters für kryogen gespeicherten Kraftstoff an einer Tankstelle, für den Fall einer Warmbetankung. Der warme Behälter wird mittels flüssigem Wasserstoff von der Tankstelle befüllt und dabei gekühlt, indem die gesamte zugeführte Wasserstoff-Masse wird als erwärmter gasförmiger Wasserstoff wieder an die Tankstelle abgegeben wird. Die Befüllleitung (F-Bev) und die Entnahmeleitung (G-Bev) sind während der ersten Zeitabschnitts (Abkühlen) geöffnet. An der Tankstelle wird das Signal Betankung ausgegeben, bis zum Betankungsende, am Ende des zweiten Zeitabschnitts (Flüssigkeit), während dessen ebenfalls die Befüllleitung (F-Bev) und die Entnahmeleitung (G-Bev) geöffnet sind und der Behälter die notwendige Temperatur erreicht hat um flüssigen Wasserstoff, LH2, anzunehmen. Dadurch steigt der Flüssigkeitsspiegel im Behälter. Eine Restmenge erwärmtes Gas wird weiterhin an die Tankstelle über die Entnahmeleitung (G-Bev) abgeführt. Am Ende der Betankung hat der Flüssigkeitspegel im Behälter 100 % erreicht, die Betankung wird beendet und die Befüllleitung (F-Bev) und die Entnahmeleitung (G-Bev) werden über die Behälterventile geschlossen.

Zu diesem Zeitpunkt ist der Behälter jedoch nicht vollständig durchgekühlt, Restwärme wird vom Wasserstoff aufgenommen, dieser erwärmt sich und dehnt sich aus, dadurch steigt der Druck im Behälter. Der Druckanstieg, gepunktet gezeichnet, kann so groß sein, dass auch durch das Ansprechen des Boil-off-Ventils (BOV öffnet) keine ausreichenden Mengen Gas abgeführt werden können und aufgrund weiteren Druckanstiegs ein unerwünschtes Öffnen des Sicherheitsabblaseventils ( SV öffnet) stattfindet.

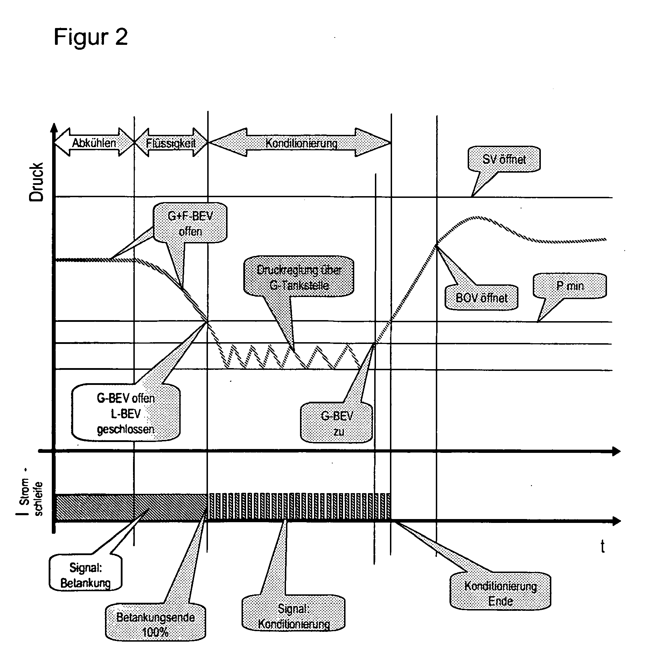

Die Figur 2 zeigt das erfindungsgemäße Verfahren, das oben genannten Nachteil vermeidet, in einem Druckverlauf-Zeit-Diagramm für die Befüllung eines Behälters mit kryogen gespeichertem Kraftstoff in drei Zeitabschnitten, unter Verwendung eines Zweipunktreglers. Die ersten beiden Zeitabschnitte (Abkühlen, Flüssigkeit) entsprechen denen zum Stand der Technik beschrieben aus Figur 1. Sie werden daher nicht nochmals erläutert. Am Ende des zweiten Zeitabschnitts (Flüssigkeit) bleibt allerdings die Entnahmeleitung (G-Bev) offen und nur die Befüllleitung (L-Bev) wird geschlossen.

Ein auf den ersten und zweiten Zeitabschnitt (Abkühlen, Flüssigkeit) folgender dritter Zeitabschnitt (Konditionierung) mit geschlossener Befüllleitung (L-Bev) und geöffneter Entnahmeleitung (G-Bev) folgt, um Gas aus dem Behälter zur Tankstelle zurückzuführen bis der Druck und/oder die Temperatur im Behälter auf vorbestimmte Werte gesunken sind. Dabei wird tankstellenseitig das Signal Konditionierung ausgegeben. Die tankstellenseitig vorhandene Regeleinrichtung, ein Zweipunktregler, hält im dritten Zeitabschnitt (Konditionierung) den Druck im Behälter über dem Umgebungsdruck aber unterhalb des Behälterbetriebsdrucks. Die noch vorhandene Wärmemenge im Tanksystem wird über die Druckanstiegsgeschwindigkeit im Behälter ermittelt. Und die Entnahmeleitung (G-Bev) wird frühestens dann geschlossen, wenn eine nachfolgende Druckerhöhung, hervorgerufen durch die noch vorhandene Wärmemenge im Tanksystem und durch die geschlossene Entnahmeleitung (G-Bev), unterhalb des Druckgrenzwerts (SV öffnet) bleibt, der für das Öffnen eines Tanksicherheitsabblaseventils vorgesehen ist. Ein tankstellenseitiges Steuergerät verarbeitet dazu vorgegebene Werte und Messwerte während der Verfahrensschritte und beendet den Betankungsvorgang frühestens nach Ablauf des dritten Zeitabschnitts (Konditionierung) durch einseitige Freigabe des tankstellenseitigen Betankungsorgans. Durch den Übergang der Restwärme des Behälters an den Wasserstoff wird jetzt nur noch nach einer bestimmten Zeit der Nichtbenutzung des Kraftfahrzeugs das Boil-Off-Ventil geöffnet und gasförmiger Wasserstoff abgeblasen (BOV öffnet).

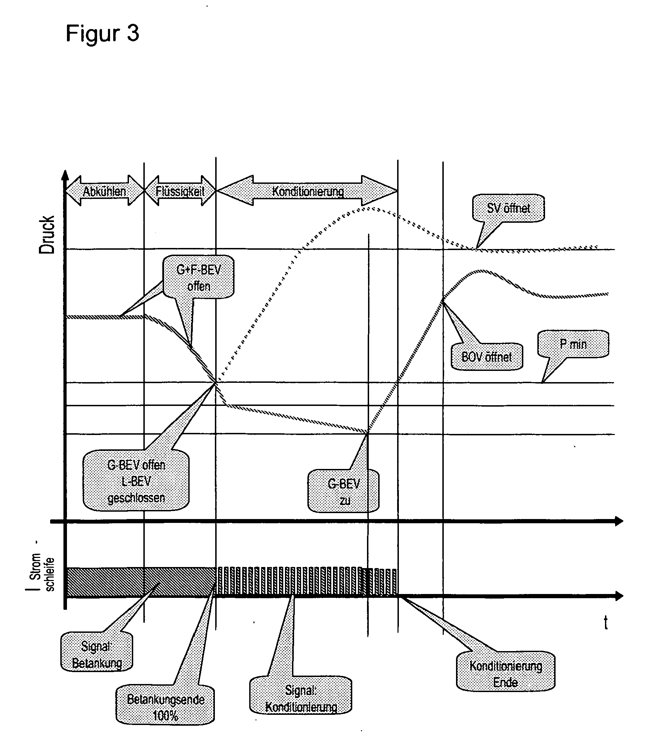

Figur 3 zeigt im Unterschied zu Figur 2 ein Druckverlauf-Zeit-Diagramm für die Befüllung eines Behälters mit kryogen gespeichertem Kraftstoff gemäß des erfindungsgemäßen Verfahrens mit einem proportionalen Regelorgan. Alle hier nicht erläuterten Verfahrensschritte und -merkmale entsprechen denen aus Figur 2.

Die tankstellenseitig vorhandene Regeleinrichtung ist bei diesem Verfahren ein proportionales Regelorgan, das im dritten Zeitabschnitt (Konditionierung) den Druck im Behälter über dem Umgebungsdruck aber unterhalb des Behälterbetriebsdrucks hält. Die noch vorhandene Wärmemenge im Tanksystem wird daher durch das Steuergerät über den vorhandenen Momentandruck im Behälter ermittelt. Zusätzlich ist in dieser Figur, für das beschriebene Verfahren unbedeutend, nur zum Vergleich und zur Darstellung des Unterschieds, gepunktet, der Verlauf des Drucks im Behälter über der Zeit aus Figur 1 übernommen.

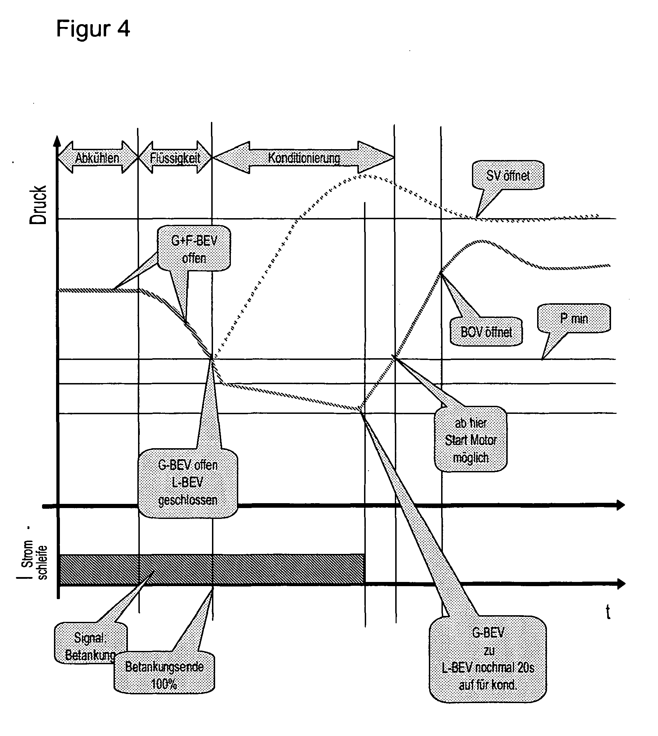

Figur 4 zeigt im Unterschied zu Figur 3 ein Druckverlauf-Zeit-Diagramm für die Befüllung eines Behälters mit kryogen gespeichertem Kraftstoff gemäß des erfindungsgemäßen Verfahrens ohne tankstellenseitiges Regelorgan. Alle hier nicht erläuterten Verfahrensschritte und -merkmale entsprechen denen aus Figur 2 und Figur 3.

Am Ende des dritten Zeitabschnitts (Konditionierung), folgt noch ein vierter Zeitabschnitt (Konditionierung), in dem die Befüllleitung (L-Bev) nochmals geöffnet und wieder geschlossen wird. Dabei wird die Befüllleitung (L-Bev) etwa 20 Sekunden offen gehalten, während die Entnahmeleitung (G-Bev) bereits geschlossen ist. So kann auch ohne Regelorgan, wenn Druck bzw. Temperatur im Behälter auf ein erforderliches Maß abgesunken sind und das Signal Betankung vom Fahrzeug weggeschaltet wird, durch Öffnen der Befüllleitung (L-Bev) seitens der Tankstelle auf einfache Weise die Funktionsroutine Ende der Betankung ausgelöst werden. Anschließend kann die Betankungskupplung zum Lösen freigegeben werden.

## Patentansprüche

1. Verfahren zum Betrieb einer Vorrichtung zum Befüllen eines Behälters zur Speicherung von Kraftstoff als kondensiertes Gas, insbesondere eines Kryotanks, für einen mit kryogen gespeichertem Kraftstoff betreibbaren Verbraucher, insbesondere eine Brennkraftmaschine eines Kraftfahrzeugs, wobei der Behälter eine Befülleinrichtung für den kryogen gespeicherten Kraftstoff besitzt, mindestens bestehend aus einer Befüllleitung (F-Bev) und einer Entnahmeleitung (G-Bev), zur Verbindung mit einer tankstellenseitigen Befülleinrichtung, wobei der Befüllvorgang so gesteuert wird, dass in einem ersten Zeitabschnitt (Abkühlen), zur Kühlung des Behälters, in diesen über die Befüllleitung (F-Bev) kondensiertes Gas eingeleitet wird, das zumindest größtenteils als Gas über die Entnahmeleitung (G-Bev) wieder entnommen wird und dass in einem zweiten, darauf folgenden Zeitabschnitt (Flüssigkeit), der Behälter mit kondensiertem Gas, unter Entnahme mindestens des **dadurch** verdrängten Gases, befüllt wird, **dadurch gekennzeichnet, dass** in einem, darauf folgenden, dritten Zeitabschnitt (Konditionierung), die Befüllleitung (F-Bev) geschlossen wird und die Entnahmeleitung (G-Bev) offen gehalten wird, um Gas aus dem Behälter zur Tankstelle zurückzuführen bis der Druck und/oder die Temperatur im Behälter auf vorbestimmte Werte gesunken sind.

2. Verfahren nach Anspruch 1, **dadurch gekennzeichnet, dass** auf den dritten Zeitabschnitt (Konditionierung) ein vierter Zeitabschnitt (Konditionierung) folgt, in dem die Befüllleitung (F-Bev) nochmals geöffnet und wieder geschlossen wird.

3. Verfahren nach Anspruch 1 oder 2, **dadurch gekennzeichnet, dass** eine tankstellenseitig vorhandene Regeleinrichtung, insbesondere ein Zweipunktregler oder ein proportionales Regelorgan, im dritten Zeitabschnitt (Konditionierung) den Druck im Behälter über dem Umgebungsdruck aber unterhalb des Behälterbetriebsdrucks hält.

4. Verfahren nach einem der Ansprüche 1 bis 3, **dadurch gekennzeichnet, dass** im dritten Zeitabschnitt (Konditionierung) die noch vorhandene Wärmemenge im Tanksystem, insbesondere über die Druckanstiegsgeschwindigkeit oder den vorhandenen Momentandruck im Behälter, ermittelt wird.

5. Verfahren nach einem der Ansprüche 1 bis 4, **dadurch gekennzeichnet, dass** im dritten Zeitabschnitt (Konditionierung) die Entnahmeleitung (G-Bev) frühestens dann geschlossen wird, wenn eine nachfolgende Druckerhöhung, hervorgerufen durch die noch vorhandene Wärmemenge im Tanksystem und durch die geschlossene Entnahmeleitung (G-Bev), unterhalb des Druckgrenzwerts (SV öffnet) bleibt, der für das Öffnen eines Tanksicherheitsabblaseventils vorgesehen ist.

6. Verfahren nach einem der Ansprüche 1 bis 5, **dadurch gekennzeichnet, dass** der Betankungsvorgang frühestens nach Ablauf des dritten Zeitabschnitts (Konditionierung) durch ein- /oder gegenseitige Freigabe fahrzeug- und tankstellenseitiger Betankungsorgane beendet ist.

7. Vorrichtung nach einem der Ansprüche 1 bis 6, **dadurch gekennzeichnet, dass** ein, insbesondere tankstellenseitiges, Steuergerät vorhanden ist, das vorgegebene und Messwerte entsprechend der Verfahrensschritte in mindestens einem der Ansprüche 1 bis 6 verarbeitet.

## Claims

1. A method for operating a device for filling a container for storing fuel as a condensed gas, especially a cryotank, for a consumer which can be operated with cryogenically stored fuel, especially an internal combustion engine of a motor vehicle, the container having a filling mechanism for the cryogenically stored fuel, at least comprising a filling line (F-Bev) and a removal line (G-Bev), for connection to a filling mechanism on the filling station side, a filling process being controlled in such a way that, in a first time section (cooling), to cool the container, condensed gas is introduced into the container by means of the filling line (F-Bev), which is at least largely removed again as gas via the removal line (G-Bev) and in that, in a second, subsequent time section (liquid), the container is filled with condensed gas, with at least the removal of the gas displaced thereby, **characterised in that** in a subsequent, third time section (conditioning), a filling line (F-Bev) is closed and the removal line (G-Bev) is kept open to return gas from the container to the filling station until the pressure and/or the temperature in the container have fallen to predetermined values.

2. A method according to claim 1, **characterised in that** a fourth time section (conditioning), in which the filling line (F-Bev) is opened and closed again follows the third time portion (conditioning).

3. A method according to claim 1 or 2, **characterised in that** a controller present on the filling station side, especially a two-point controller or a proportional control member, keeps the pressure in the container above the ambient pressure or below the container operating pressure in the third time section (conditioning).

4. A method according to any one of claims 1 to 3, **characterised in that** in the third time section (conditioning), the quantity of heat still present in the tank system is determined, especially by means of the pressure increase speed or the existing instantaneous pressure in the container.

5. A method according to any one of claims 1 to 4, **characterised in that,** in the third time section (conditioning), the removal line (G-Bev) is closed at the earliest when a following pressure increase, caused by the quantity of heat still existing in the tank system and by the closed removal line (G-Bev), remains below the pressure limit value (SV opens), which is provided for the opening of a tank safety blow-off valve.

6. A method according to any one of claims 1 to 5, **characterised in that** the fuelling process is ended at the earliest after the expiry of the third time section (conditioning) by a one-sided or mutual release of fuelling members on the vehicle or filling station side.

7. A device according to any one of claims 1 to 6, **characterised in that** a control apparatus, especially on the filling station side, is present, which processes predetermined measured values in accordance with the method steps in at least any one of claims 1 to 6.

## Revendications

1. Procédé de gestion d'un dispositif de remplissage d'un réservoir servant à stocker du carburant à l'état de gaz condensé, notamment un réservoir cryogénique pour un utilisateur fonctionnant avec un carburant stocké à l'état cryogénique, notamment un moteur à combustion d'un véhicule automobile,
le réservoir comportant une installation de remplissage pour du carburant stocké à l'état cryogénique, composé d'au moins une conduite de remplissage (F-Bev) et une installation de prélèvement (G-Bev), pour être reliée à une installation de remplissage côté poste de distribution de carburant,
l'opération de remplissage étant commandée de façon qu'au cours d'une première période (refroidissement), on refroidit le réservoir et on introduit du gaz condensé par la conduite de remplissage (F-Bev), dont au moins la plus grande partie est de nouveau récupérée à l'état gazeux par une conduite de prélèvement (G-Bev), et
dans une seconde période (liquide) suivante, on remplit le réservoir avec du gaz condensé et on prélève le gaz ainsi refoulé,
**caractérisé en ce que**
dans une troisième période (conditionnement) suivante, on ferme la conduite de remplissage (F-Bev) et on maintient ouverte la conduite de prélèvement (G-Bev) pour reconduire du gaz du réservoir vers le poste de distribution de carburant jusqu'à ce que la pression et/ou la température dans le réservoir soient tombées à une valeur prédéfinie.

2. Procédé selon la revendication 1,
**caractérisé en ce que**
la troisième période (conditionnement), est suivie d'une quatrième période (conditionnement) au cours de laquelle, on ouvre de nouveau la conduite de remplissage (F-Bev) et on la referme.

3. Procédé selon la revendication 1 ou 2,
**caractérisé en ce qu'**
une installation de régulation équipant le poste de carburant, notamment un régulateur en deux points ou un organe de régulation proportionnelle, maintient au cours de la troisième période (conditionnement), la pression dans le réservoir au-dessus de la pression ambiante, mais en dessous de la pression de fonctionnement du réservoir.

4. Procédé selon les revendications 1 à 3,
**caractérisé en ce que**
dans la troisième période (conditionnement), on détermine la quantité de chaleur qui se trouve encore dans le système de réservoir, notamment par la vitesse de montée en pression ou par la pression instantanée dans le réservoir.

5. Procédé selon les revendications 1 à 4,
**caractérisé en ce que**
dans la troisième période (conditionnement), on ferme la conduite de prélèvement (G-Bev) au plus tôt pour une augmentation consécutive de la pression provoquée par la quantité de chaleur existant encore dans le système de réservoir et par la conduite de prélèvement fermée (G-Bev), restant en dessous de la valeur limite de pression (SV ouvert) définie pour l'ouverture d'une soupape de sécurité de réservoir.

6. Procédé selon les revendications 1 à 5,
**caractérisé en ce que**
l'opération de remplissage se termine au plus tôt à la fin de la troisième période (conditionnement) par une libération unilatérale et/ou réciproque des organes de remplissage côté véhicule et côté poste de distribution de carburant.

7. Procédé selon les revendications 1 à 6,
**caractérisé par**
un appareil de commande, notamment du côté du poste de distribution de carburant, traitant les valeurs de mesure et les valeurs prédéfinies selon les étapes de procédé d'au moins l'une des revendications 1 à 6.
